# EUROPÄISCHE PATENTSCHRIFT

(11) **EP 3 934 862 B1**
(45) Veröffentlichungstag und Bekanntmachung des Hinweises auf die Patenterteilung: **21.06.2023**
(21) Anmeldenummer: 21721895.7
(22) Anmeldetag: 22.04.2021
(51) Int. Cl.: B25J 11/00, B25J 9/16, B25J 15/04

(54) **SCHNELLSPANNSYSTEM ZUR VERBINDUNG VON WERKZEUGMASCHINEN MIT EINEM ROBOTER**
RAPID CLAMPING SYSTEM FOR CONNECTING MACHINE TOOLS TO A ROBOT
SYSTÈME DE SERRAGE RAPIDE CONÇU POUR RELIER DES MACHINES-OUTILS À UN ROBOT

(30) Priorität: 24.04.2020 DE 102020111292
(43) Veröffentlichungstag der Anmeldung: 12.01.2022
(73) Patentinhaber: Ferrobotics Compliant Robot Technology GmbH, 4040 Linz (AT)
(72) Erfinder: NADERER, Ronald, 4040 Linz (AT)
(74) Vertreter: Westphal, Mussgnug & Partner, Patentanwälte mbB
(86) Internationale Anmeldenummer: PCT/EP2021/060529
(87) Internationale Veröffentlichungsnummer: WO 2021/214217

(56) Entgegenhaltungen:
- CN-A- 110 576 346
- CN-A- 111 002 155
- DE-A1- 10 326 239
- DE-U1- 29 922 796
- US-B2- 8 857 821

## Beschreibung

### TECHNISCHES GEBIET

Die vorliegende Erfindung betrifft ein Schnellspannsystem (quick-clamping *system*) zur Verbindung von Werkzeugmaschinen mit einem Roboter.

### HINTERGRUND

Bei der robotergestützten Oberflächenbearbeitung wird eine Werkzeugmaschine (z.B. eine Schleifmaschine, eine Bohrmaschine, eine Fräsmaschine, eine Poliermaschine und dgl.) von einem Manipulator, beispielsweise einem Industrieroboter, geführt. Dabei kann die Werkzeugmaschine auf unterschiedliche Weise mit dem sogenannten TCP (*Tool Center Point*) des Manipulators gekoppelt sein; der Manipulator kann in der Regel Position und Orientierung des TCP praktisch beliebig einstellen, um eine Werkzeugmaschine auf einer Trajektorie z.B. parallel zu einer Oberfläche eines Werkstücks zu bewegen. Industrieroboter sind üblicherweise positionsgeregelt, was eine präzise Bewegung des TCP entlang der gewünschten Trajektorie ermöglicht.

Um beim robotergestützten Schleifen oder bei anderen Oberflächenbearbeitungsprozessen ein gutes Ergebnis zu erzielen, ist in vielen Anwendungen eine Regelung der Prozesskraft (Schleifkraft) nötig, was mit herkömmlichen Industrierobotern oft nur schwer mit hinreichender Genauigkeit zu realisieren ist. Die großen und schweren Armsegmente eines Industrieroboters besitzen eine zu große Massenträgheit, als dass ein Regler (*closedloop controller*) rasch genug auf Schwankungen der Prozesskraft reagieren könnte. Um dieses Problem zu lösen, kann zwischen dem TCP des Manipulators und der Werkzeugmaschine ein im Vergleich zum Industrieroboter kleiner (und leichter) Linearaktor angeordnet sein, der den TCP des Manipulators mit der Werkzeugmaschine koppelt. Der Linearaktor regelt während der Oberflächenbearbeitung lediglich die Prozesskraft (also die Anpresskraft zwischen Werkzeug und Werkstück), während der Manipulator die Werkzeugmaschine samt Linearaktor positionsgeregelt entlang der gewünschten Trajektorie bewegt. Durch die Kraftregelung kann der Linearaktor Ungenauigkeiten in der Lage und der Form des zu bearbeitenden Werkstücks sowie auch Ungenauigkeiten der Trajektorie des Manipulators (innerhalb gewisser Grenzen) ausgleichen. Nichtsdestotrotz gibt es Roboter, die in der Lage sind, auch ohne den erwähnten Linearaktor mittels Kraft-/Momenten-Regelung die Prozesskraft einzustellen.

Es sind verschiedene Spannsysteme bekannt, die dafür geeignet sind, verschiedene Werkzeugmaschinen mit dem Roboter zu verbinden und wieder zu lösen. In diesem Zusammenhang sei z.B. auf die Publikationen DE 103 26 239 A1, CN110576 346 A und CN 111 002 155 A verwiesen. Bei einfachen Systemen muss ein Arbeiter das Werkzeug am Roboter manuell austauschen. Die Anforderungen an Präzision sind bei Robotern üblicherweise relativ hoch und gegenwärtig kommerziell verfügbare Spannsysteme sind relativ komplex und teuer.

Der Erfinder hat sich die Aufgabe gestellt, ein vergleichsweise einfaches und für viele Anwendung ausreichend präzises Schnellspannsystem für die Verbindung von Werkzeugmaschinen zu schaffen,

### ZUSAMMENFASSUNG

Die oben genannte Aufgabe wird durch die Vorrichtung gemäß Patentanspruch 1 gelöst. Verschiedene Ausführungsformen und Weiterentwicklungen sind Gegenstand der abhängigen Patentansprüche.

Es wird ein Schnellspannsystem zur Montage eines Werkzeugs oder einer Werkzeugmaschine an einem Manipulator beschrieben. Gemäß einem Ausführungsbeispiel umfasst das Schnellspannsystem folgendes: ein Spannfutter mit einer Grundplatte, welche dazu ausgebildet ist, an einem von einem Manipulator positionierbaren Flansch montiert zu werden; eine Werkzeughalterung, die zur Montage an einer Werkzeugmaschine ausgebildet ist, wobei die Werkzeughalterung eine Montageplatte aufweist, die in verriegeltem Zustand an der Grundplatte des Spannfutters anliegt; zwei oder mehr Stifte, die dazu ausgebildet sind, in montiertem Zustand die Montageplatte an der Grundplatte auszurichten und eine Bewegung der Montageplatte relativ zu der Grundplatte in einer Ebene parallel zur Grundplatte zu verhindern; mindestens ein elastisches Element; und einen Spannverschluss, der dazu ausgebildet ist, die Werkzeughalterung an der Grundplatte des Spannfutters zu verriegeln, wobei im verriegelten Zustand das elastische Element deformiert ist und eine Vorspannkraft zwischen der Grundplatte und der Montageplatte bewirkt und wobei das mindestens eine elastische Element eine Scheibe aus elastischem Material umfasst, die zwischen der Grundplatte und Montageplatte angeordnet ist.

### KURZE BESCHREBIBUNG DER ZEICHNUNGEN

Verschiedene Implementierungen werden nachfolgend anhand von den in den Abbildungen dargestellten Beispielen näher erläutert. Die Darstellungen sind nicht zwangsläufig maßstabsgetreu und die Erfindung beschränkt sich nicht nur auf die dargestellten Aspekte. Vielmehr wird Wert darauf gelegt, die den dargestellten Ausführungsbeispielen zugrunde liegenden Prinzipien darzustellen.
Figur 1 ist eine exemplarische schematische Darstellung einer robotergestützten Schleifvorrichtung mit einer Schleifmaschine, die mit einem Industrieroboter mittels eines kraftgeregelten Linearaktors gekoppelt ist; der Linearaktor bewirkt eine teilweise mechanische Entkopplung von Industrieroboter und Schleifmaschine.
Figur 2 ist eine perspektivische Explosionsdarstellung eines Beispiels eines Schnellspannsystems zur Verbindung einer Werkzeugmaschine mit einem Roboter.
Figur 3 ist eine Seitenansicht des Beispiels aus Fig. 2.
Figur 4 ist eine perspektivische Darstellung des Schnellspannsystems in geklemmten Zustand.
Figur 5 illustriert das System aus Fig. 4 inklusive Werkzeugmaschine.

### DETAILLIERTE BESCHREIBUNG

Bevor verschiedene Ausführungsbeispiele im Detail erläutert werden, wird zunächst ein allgemeines Beispiel einer robotergestützten Schleifvorrichtung beschrieben. Es versteht sich, dass die hier beschriebenen Konzepte auch auf andere Arten von Oberflächenbearbeitung (z.B. Polieren, Fräsen, Bohren, etc.) übertragbar und nicht auf Schleifen beschränkt sind. Mit dem hier beschriebenen Schnellspannsystem können praktisch beliebige Komponenten schnell mit einem Roboter verbunden werden.

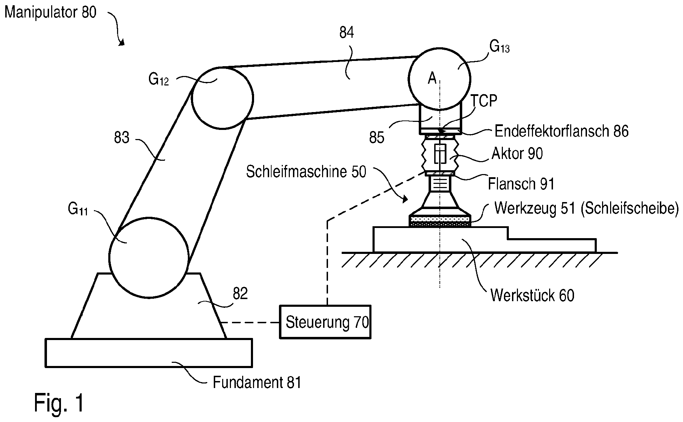

Gemäß Fig. 1 umfasst eine robotergestützte Schleifvorrichtung einen Manipulator 80, beispielsweise einen Industrieroboter und eine Schleifmaschine 50 mit rotierendem Schleifwerkzeug 51, wobei diese mit dem sogenannten *Tool-Center-Point* (TCP) des Manipulators 1 über einen Linearaktor 20 gekoppelt sein kann ist. Der TCP ist genau genommen kein Punkt, sondern ein Vektor und kann z.B. durch drei Raumkoordinaten (Position) und drei Winkel (Orientierung) beschrieben werden. In der Robotik werden zur Beschreibung der Lage des TCPs manchmal auch generalisierte Koordinaten (meist sechs Gelenkwinkel des Roboters) im Konfigurationsraum verwendet. Position und Orientierung des TCPs werden manchmal auch als "Pose" bezeichnet. Die Position (inkl. Orientierung) des TCP als Funktion der Zeit definiert die Bewegung des Schleifwerkzeugs, die als Trajektorie bezeichnet wird. Als TCP wird oft der Mittelpunkt des Endeffektorflansches des Roboters definiert, was aber nicht notwendigerweise der Fall sein muss. Der TCP kann ein beliebiger Punkt sein (und theoretisch auch außerhalb des Roboters liegen), dessen Position und Orientierung vom Roboter einstellbar ist. Der TCP kann auch den Ursprung des Werkzeugkoordinatensystems definieren.

Im Falle eines Industrieroboters mit sechs Freiheitsgraden kann der Manipulator 80 aus vier Segmenten 82, 83, 84 und 85 aufgebaut sein, die jeweils über Gelenke G₁₁, G₁₂ und G₁₃ verbunden sind. Das erste Segment 82 ist dabei meist starr mit einem Fundament 81 verbunden (was jedoch nicht zwangsläufig der Fall sein muss). Das Gelenk G₁₁ verbindet die Segmente 82 und 83. Das Gelenk G₁₁ kann 2-achsig sein und eine Drehung des Segments 83 um eine horizontale Drehachse (Elevationswinkel) und eine vertikale Drehachse (Azimutwinkel) ermöglichen. Das Gelenk G₁₂ verbindet die Segmente 83 und 84 und ermöglicht eine Schwenkbewegung des Segments 84 relativ zur Lage des Segments 83. Das Gelenk G₁₃ verbindet die Segmente 84 und 85. Das Gelenk G₁₃ kann 2-achsig sein und daher (ähnlich wie das Gelenk G₁₁) eine Schwenkbewegung in zwei Richtungen ermöglichen. Der TCP hat eine feste Relativposition zum Segment 85, wobei dieses üblicherweise noch ein Drehgelenk (nicht dargestellt) umfasst, welches eine Drehbewegung des am Segment 85 angeordneten Endeffektorflansches 86 um eine Längsachse A des Segments 85 ermöglicht (in Fig. 1 als strichpunktierte Line eingezeichnet, entspricht in dem dargestellten Beispiel auch der Drehachse des Schleifwerkzeugs). Jeder Achse eines Gelenks ist ein Aktor (z.B. ein Elektromotor) zugeordnet, der eine Drehbewegung um die jeweilige Gelenksachse bewirken kann. Die Aktoren in den Gelenken werden von einer Robotersteuerung 70 gemäß einem Roboterprogramm angesteuert. Verschiedene Industrieroboter/Manipulatoren und dazugehörige Steuerungen sind an sich bekannt und werden daher hier nicht weiter erläutert.

Der Manipulator 80 ist üblicherweise positionsgeregelt, d.h. die Robotersteuerung kann die Pose (Ort und Orientierung) des TCP festlegen und diesen entlang einer vordefinierten Trajektorie bewegen. In Fig. 1 ist die Längsachse des Segments 85, auf der der TCP liegt mit A bezeichnet. Wenn der Aktor 90 an einem Endanschlag anliegt, ist mit der Pose des TCP auch die Pose der Schleifmaschine 50 (und auch der Schleifscheibe 51) definiert. Wie eingangs bereits erwähnt, dient der Aktor 90 dazu, während des Schleifprozesses die Kontaktkraft (Prozesskraft) zwischen Werkzeug und Werkstück 60 auf einen gewünschten Wert einzustellen. Eine direkte Kraftregelung durch den Manipulator 80 ist für Schleifanwendungen in der Regel zu ungenau, da durch die hohe Massenträgheit der Segmente 83 bis 85 des Manipulators 80 eine schnelle Kompensation von Kraftspitzen (z.B. beim Aufsetzen des Schleifwerkzeugs auf das Werkstück 60) mit herkömmlichen Manipulatoren praktisch nicht möglich ist. Aus diesem Grund ist die Robotersteuerung 70 dazu ausgebildet, die Pose (Position und Orientierung) des TCP des Manipulators 80 zu regeln, während die Kraftregelung ausschließlich mit Hilfe Aktors 90 bewerkstelligt wird.

Wie bereits erwähnt, kann während des Schleifprozesses die Kontaktkraft F_{K} zwischen Schleifwerkzeug (Schleifmaschine 50 mit Schleifscheibe 51) und Werkstück 60 mit Hilfe des Linear-Aktors 90 und einer Kraftregelung (die beispielsweise in der Steuerung 70 implementiert sein kann) so eingestellt werden, dass die Kontaktkraft F_{K} (in Richtung der Längsachse A) zwischen Schleifscheibe 51 und Werkstück 60 einem vorgebbaren Sollwert entspricht. Die Kontaktkraft F_{K} ist dabei eine Reaktion auf die Aktorkraft F_{A}, mit der der Linearaktor 90 auf die Werkstückoberfläche drückt. Bei fehlendem Kontakt zwischen Werkstück 60 und Werkzeug 51 fährt der Aktor 90 aufgrund der fehlenden Kontaktkraft am Werkstück 60 gegen einen Endanschlag (nicht dargestellt da im Aktor 2 integriert) und drückt mit einer definierten Kraft gegen diesen. Die Kraftregelung ist dabei durchgehend aktiv. In dieser Situation (kein Kontakt) ist die Aktorauslenkung daher maximal und der Aktor 90 befindet sich in einer Endposition. Die definierte Kraft, mit der der Aktor 90 gegen den Endanschlag drückt kann sehr klein sein oder (theoretisch) sogar auf null geregelt werden, um ein möglichst sanftes Kontaktieren der Werkstückoberfläche zu ermöglichen.

Die Positionsregelung des Manipulators 80 (die ebenfalls in der Steuerung 70 implementiert sein kann) kann vollkommen unabhängig von der Kraftregelung des Aktors 90 arbeiten. Der Aktor 90 ist nicht verantwortlich für die Positionierung der Schleifmaschine 50, sondern lediglich für das Einstellen und Aufrechterhalten der erwünschten Kontaktkraft F_{K} während des Schleifprozesses und zur Erkennung von Kontakt zwischen Werkzeug 51 und Werkstück 60. Ein Kontakt kann z.B. in einfacher Weise dadurch erkannt werden, dass der Aktor sich aus der Endposition herausbewegt hat (Aktorauslenkung a ist kleiner als die maximale Auslenkung a_{MAX} am Endanschlag).

Der Aktor 90 kann ein pneumatischer Aktor sein, z.B. ein doppeltwirkender Pneumatikzylinder. Jedoch sind auch andere pneumatische Aktoren anwendbar wie z.B. Balgzylinder und Luftmuskel. Als Alternative kommen auch elektrische Direktantriebe (getriebelos) in Betracht. Es versteht sich, dass die Wirkrichtung des Aktors 90 und die Drehachse der Schleifmaschine 50 nicht notwendigerweise mit der Längsachse A des Segments 85 des Manipulators 80 zusammenfallen müssen. Im Falle eines pneumatischen Aktors kann die Kraftregelung in an sich bekannter Weise mit Hilfe eines Regelventils, eines Reglers (z.B. implementiert in der Steuerung 70) und eines Druckluftspeichers oder Kompressors realisiert werden. Da für die Berücksichtigung der Schwerkraft (d.h. der Gewichtskraft der Schleifmaschine 50) die Neigung zur Lotrechten relevant ist, kann der Aktor 2 einen Neigungssensor enthalten oder diese Information kann basierend auf den Gelenkwinkeln des Manipulators 80 ermittelt werden. Die ermittelte Neigung wird von dem Kraftregler berücksichtigt. Die konkrete Implementierung der Kraftregelung ist an sich bekannt und für die weitere Erläuterung nicht wichtig und wird daher auch nicht detaillierter beschrieben. Der Aktor 90 ermöglicht nicht nur eine gewisse mechanische Entkopplung zwischen Manipulator 80 und Werkstück 60, sondern ist auch in der Lage, Ungenauigkeiten in der Positionierung des TCP auszugleichen.

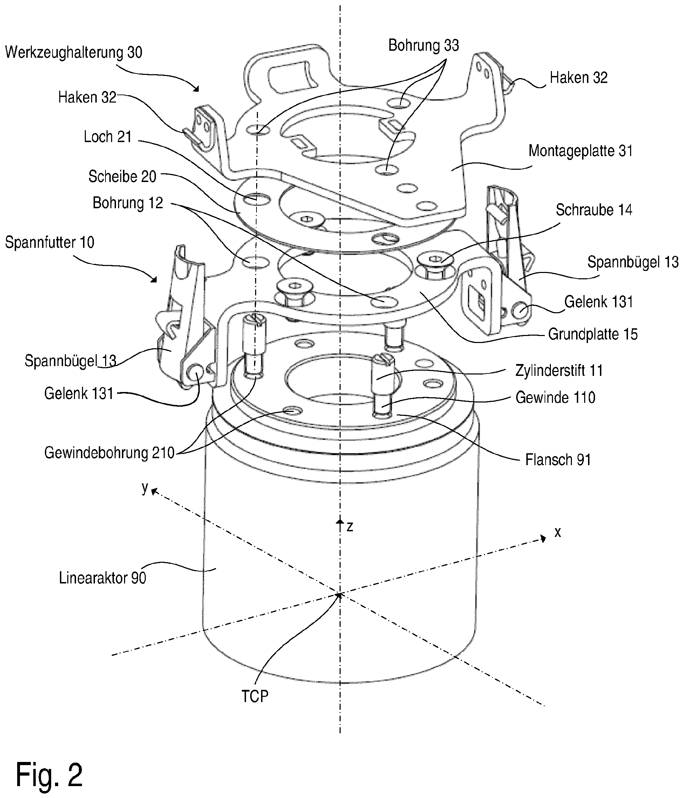

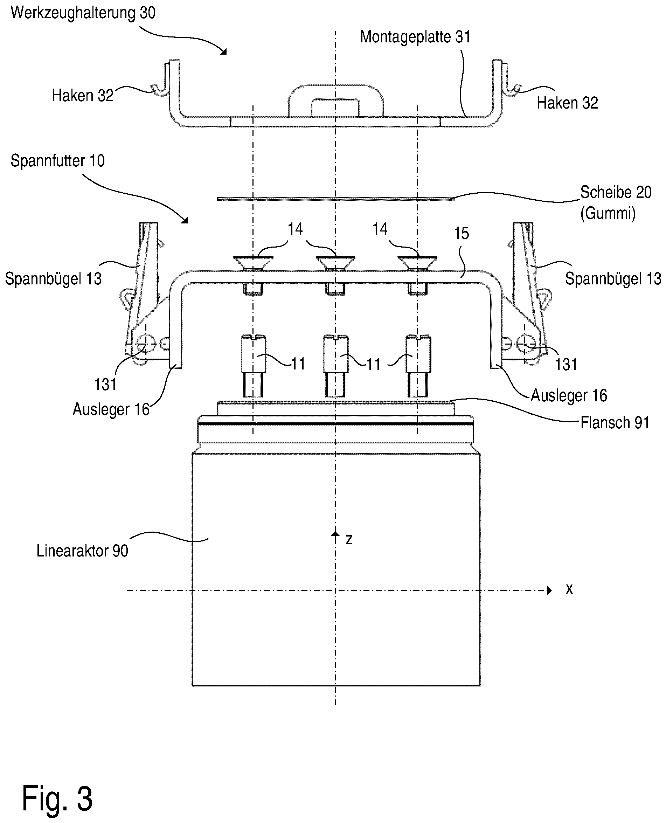

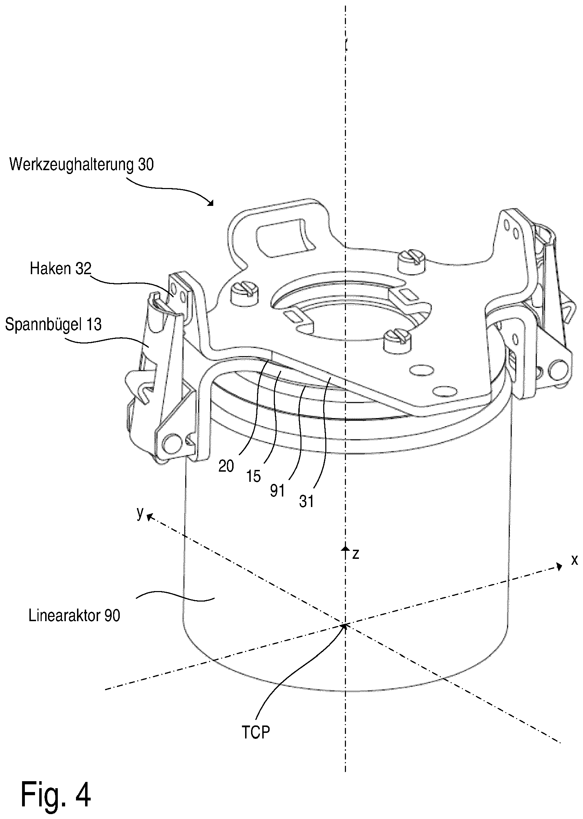

Fig. 2 illustriert eine exemplarische Implementierung eines Schnellspannsystems, das es ermöglicht, eine Werkzeugmaschine wie z.B. eine Schleifmaschine, eine Poliermaschine oder eine Fräsmaschine relativ einfach mit einem Roboter zu verbinden und wieder zu lösen. Fig. 2 zeigt einen Teil des oben erwähnten Linearaktors 90, der mit einem Ende mit dem Endeffektorflansch 85 (am distalen Armsegment 85 des Roboters, siehe Fig. 1) gekoppelt ist und am anderen Ende selbst einen Flansch 91 zur Montage einer Werkzeugmaschine aufweist. Der Aktor 90 wird daher häufig auch als "aktiver Flansch" bezeichnet, da er aktiv eine Kraft zwischen dem Endeffektorflansch und der Werkzeugmaschine einstellen kann. Fig. 3 ist eine zu Fig. 2 korrespondierende Seitenansicht. Fig. 4 ist eine perspektivische Darstellung des zusammengebauten Schnellspannsystems in verriegeltem Zustand.

Das Schnellspannsystem umfasst gemäß Fig. 2 im Wesentlichen ein Spannfutter 10 (*chuck*, *clamping chuck*), welches mechanisch mit dem Flansch 91 gekoppelt werden kann (z.B. mittels Schrauben) ein elastisches Element, welche im vorliegenden Beispiel als Gummischeibe 20 ausgebildet ist, sowie eine Werkzeughalterung 30, welche mechanisch starr mit einer Werkzeugmaschine gekoppelt sein kann. Neben Gummi sind auch Kunststoffe, insbesondere Elastomere, geeignete Materialien für die Scheibe 20. Der Flansch 91 weist mehrere Gewindebohrungen 210 auf. In dem dargestellten Beispiel weist der Flansch 91 sechs Gewindebohrungen 210 auf, wobei in drei der Gewindebohrungen 210 Zylinderstifte 11 eingeschraubt sind. Die Zylinderstifte haben in einem oberen Abschnitt eine zylindrische Form und weisen in einem unteren Abschnitt ein Gewinde 110 auf, das in die Gewindebohrungen 210 eingeschraubt werden kann. Zylinderstifte werden häufig auch als Passstifte (*dowel pins*) bezeichnet. Statt einer Schraubverbindung können auch Zylinderstifte (ohne Gewinde) in korrespondierende Löcher eingeklebt oder eingepresst werden. Die eingeschraubten Zylinderstifte 11 dienen als Führungen für die Werkzeughalterung 30, um insbesondere eine Verkippung der Werkzeughalterung 30 in Bezug auf die z-Achse (Achse rechtwinklig auf die Ebene der Grundplatte 15, siehe Fig. 2) zu vermeiden. Ganz allgemein dienen die Stifte 11 eine Bewegung der Montageplatte 31 der Werkzeughalterung 30 relativ zu der Grundplatte 15 des Spannfutters 10 in einer Ebene (xy-Ebene) parallel zu der Plattenebene zu verhindern, während eine gewisse Bewegung normal zu dieser Ebene zugelassen wird.

Das Spannfutter 10 weist im Wesentlichen ein Grundplatte 15 und zwei oder mehr seitlich daran montierte Spannbügel 13 auf. Die Grundplatte 15 weist mehrere Löcher 12 (in der Regel Bohrungen) auf. In dem Beispiel aus Fig. 3 hat die Grundplatte 15 sechs Löcher, wobei durch drei der Löcher 12 die in den Flansch 91 geschraubten Zylinderstifte 11 gesteckt werden und damit die Position des Spannfutters festlegen. Die anderen drei Löcher 12 dienen zur Einführung von Schrauben 14, die in korrespondierende Gewindebohrungen 21 im Flansch 91 eingeschraubt werden können, um die Grundplatte 15 am Flansch 91 zu fixieren. In dem Beispiel aus Fig. 2 sind die sechs Gewindebohrungen 210 um jeweils 60° versetzt, und folglich können die drei Zylinderstifte 11 und die drei Schrauben 14 um jeweils 120° versetzt angeordnet werden (in Bezug auf die z-Achse).

Die Grundplatte 15 weist seitlich zwei zum Flansch 91 hin abstehende Ausleger 16 auf, die mit der Grundplatte 15 einen Winkel von im Wesentlichen 90° einschließen (siehe Fig. 3). An diesen Auslegern sind die Spannbügel 13 montiert (z.B. mittels Schrauben). An dieser Stelle sei erwähnt, dass die Zylinderstifte 11 alternativ auch an der Grundplatte 15 montiert (z.B. in diese eingeschraubt) werden können (anstatt im Flansch 91). Im Hinblick auf die Einhaltung der geforderten Toleranzen kann jedoch die in Fig. 2 dargestellte Variante, bei der die Zylinderstifte 11 in den Flansch 91 geschraubt werden, besser sein (abhängig von der konkreten Anwendung). Um ihre Funktion zu erfüllen, müssen die Zylinderstifte 11 in rechtem Winkel zur Grundplatte 15 aus dieser herausragen.

Die Werkzeughalterung 30 ist starr mit einer Werkzeugmaschine (in Fig. 2-4 nicht dargestellt) verbunden. Die konkrete Konstruktion der Werkzeughalterung 30 hängt von der Werkzeugmaschine ab. Insbesondere sind jene Teile der Werkzeughalterung 30, die zur Fixierung der Werkzeughalterung an der Werkzeugmaschine dienen variabel und an die jeweilige Werkzeugmaschine angepasst. Die Werkzeughalterung 30 stellt sozusagen ein Interface dar, welches ein Einspannen der Werkzeugmaschine in das Spannfutter 10 erlaubt. Die Werkzeughalterung 30 weist eine Montageplatte 31 mit Bohrungen 33 und Haken 32 auf. Die Montageplatte 32 passt zu der Grundplatte 15 des Spannfutters 10. In montiertem Zustand ist die Die Montageplatte 32 der Werkzeughalterung 30 auf die Zylinderstifte 11 aufgesteckt, sodass die Zylinderstifte 11 durch die Bohrungen 33 hindurch verlaufen. Die Zylinderstifte 11 definieren damit die Position der Werkzeughalterung 30 (und damit auch die Position der Werkzeugmaschine) in x- und y- Richtung (d.h. quer zur z-Achse in der xy-Ebene). In eingespannten Zustand liegt die Montageplatte 32 der Werkzeughalterung 30 an der Grundplatte 15 des Spannfutters 10 an und die Spannbügel 13 (*brackets*) sind in die zugehörigen Haken 32 eingehängt und gespannt (der Haken wird manchmal auch als Halter (*keeper*) bezeichnet). Spannbügel 13 und Haken bilden daher einen Spannverschluss (*draw latch*). Ein elastisches Element - im dargestellten Beispiel eine zwischen Grundplatte 15 und Montageplatte 32 angeordnete Gummischeibe 20 - erlaubt eine kleine elastische Verschiebung der Werkzeughalterung 30 relativ zum Spannfutter 10 in z-Richtung. Das elastische Element (z.B. Gummischeibe 20) kann sich beim Verriegeln des Spannverschlusses verformen (die Gummischeibe 20 wird gequetscht) und sorgt im Verriegelten Zustand für eine Vorspannung des Spannverschlusses. Das heißt, im verriegelten Zustand ziehen die Spannbügel 13 an den jeweiligen Haken 32 (und umgekehrt). Gleichzeitig ist das elastische Element / die Gummischeibe 20 in einem deformierten, vorgespannten Zustand. Spannbügel 13 und zugehörige Haken 32 sind an sich bekannt und kommerziell erhältlich und werden daher hier nicht weiter diskutiert.

Die Spannverschlüsse (*draw latches*), die jeweils aus einem Spannbügel 13 und einem Haken 31 in Kombination mit dem elastischen Element benötigt werden, werden auch als Totpunktverriegelung (*over center latch*) bezeichnet, da der Spannbügel 13 beim Verriegeln nach dem Einhängen in den zugehörigen Haken 32 um das Gelenk 131 bis zum Totpunkt der Schwenkbewegung und über den Totpunkt hinaus geschwenkt wird. Der Spannverschluss / die Totpunktverriegelung ist damit sicher gegen ein unbeabsichtigtes Lösen, da der Spannbügel 13 nicht ohne externe Krafteinwirkung sich über den Totpunkt zurück bewegen kann. Diese externe Kraft muss beim Verriegeln und beim Entriegeln des Spannverschlusses von einem Arbeiter manuell aufgewendet werden.

An dieser Stelle sei angemerkt, dass die Gummiplatte 20 lediglich ein Beispiel für ein elastisches Element. Im Allgemeinen ist jedes elastische Element geeignet, welches (irgendwo im Schnellspannsystem) so angeordnet ist, dass es beim Verriegeln der Spannverschlüsse (Spannbügel 13 und Haken 32) elastisch deformiert wird und im verriegelten Zustand eine Vorspannkraft zwischen Spannfutter 10 und Werkzeughalterung 30 in z-Richtung ausübt, die von den Spannverschlüssen aufgenommen wird. Durch die elastische Deformation wird eine kleine Bewegung der Werkzeughalterung 30 in z-Richtung relativ zum Spannfutter 10 ermöglicht, während eine Relativbewegung in x-Richtung und y-Richtung durch die Zylinderstifte 11, die als Linearführung dienen, blockiert wird. Alternativ zu der Gummischeibe 20 können ein oder mehrere elastische Elemente auch in die Spannbügel 13 oder die Haken 32 integriert sein. In diesem Fall kann die Gummischeibe 20 weggelassen werden. Beispielsweise können die Haken 32 und/oder ein Teil der Spannbügel 13 selbst aus einem elastischen oder nachgiebigen Material gebildet sein (zumindest teilweise). In diesem Fall spricht man manchmal auch von flexiblen Spannverschlüssen (*flexible draw latches*) oder Spannbandverschlüssen. Alternativ können die Spannbügel 13 mittels einer Feder in z-Richtung an den Auslegern 16 der Grundplatte 15 elastisch verschiebbar gelagert sein. Zusätzlich oder alternativ können die Haken 32 mittels eines Federelementes oder eines anderen elastischen Elementes elastisch verschiebbar an der Montageplatte 31 gelagert sein. Zusätzlich oder alternativ können auch die Lagerbuchsen der Gelenke 131 der Spannbügel 13 aus einem elastischen Material geformt sein und die erwähnte elastische Deformation bei der Verriegelung der Spannverschlüsse zulassen.

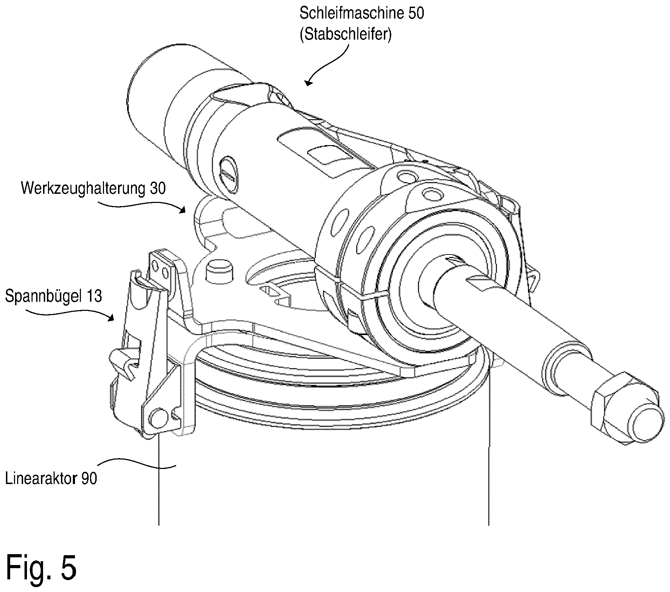

Fig. 5 illustriert einen an einem Roboter (in Fig. 5 nicht dargestellt, siehe Fig. 1) montierten Linearaktor 90 mit einem verriegelten Schnellspannsystem gemäß den Beispielen aus Fig. 2-4, wobei an der Werkzeughalterung 30 eine Stabschleifmaschine 50 befestigt ist. Die Werkzeughalterung 30 dient wie erwähnt als Interface zum Einspannen der Werkzeugmaschine an dem Spannfutter 10 des Schnellspannsystems.

Das hier beschriebene Schnellspannsystem kann vor allem bei Robotern eingesetzt werden, die in der Lage sind die Kontaktkraft zwischen Werkzeug und Werkstückoberfläche zu regeln. Wie erwähnt kann diese Kraftregelung entweder mit Hilfe des Aktors 90 umgesetzt werden oder - sofern der Roboter dafür geeignet ist - durch den Roboter selbst. In diesem Fall kann der Aktor 90 auch weggelassen werden und das Spannfutter 10 kann direkt am Endeffektorflansch 86 (vgl. Fig. 1) montiert werden anstatt an dem Flansch 91 des Aktors 90. In beiden Fällen (mit oder ohne Aktor 90) wird während des Oberflächenbearbeitungsprozesses die Kontaktkraft (Prozesskraft) geregelt, wobei während des Bearbeitungsprozesses, die in Fig. 2-4 dargestellte z-Richtung üblicherweise normal zur Werkstückoberfläche steht und die z-Richtung auch die Wirkrichtung der geregelten Kontaktkraft ist. Eventuelle Ungenauigkeiten in der Positionierung der Werkzeugmaschine in z-Richtung werden durch die Kraftregelung ausgeglichen, da die Werkzeugmaschine immer mit definierter, geregelter Kraft an das Werkstück gedrückt wird. Deshalb spielen auch Ungenauigkeiten in der Position der Werkzeugmaschine, die eine Folge der Deformation des elastischen Elements (z.B. Gummischeibe 20) sind, in der Praxis keine Rolle. Auch diese Ungenauigkeiten werden durch die Kraftregelung praktisch automatisch ausgeglichen. Ein eventuell auf das Schnellspannsystem wirkendes Drehmoment kann jedoch nicht zu einer nennenswerten Verkippung oder xy-Verschiebung der Werkzeughalterung 30 relatif zum Spannfutter 10 führen, da diese Bewegungen durch die in den Bohrungen 33 geführten Zylinderstifte 11 verhindert werden. Ein Drehmoment wird also von dem Schnellspannsystem aufgenommen. Der einzige Freiheitsgrad ist eine (sehr kleine) elastische Verschiebung in z-Richtung, welche wie erwähnt aufgrund der Kraftregelung kompensiert wird.

Schließlich sei noch angemerkt, dass die Position von Haken 32 und Spannbügel 13 vertauschbar sind, obwohl es in der Praxis vermutlich sinnvoller ist, die Spannbügel an der Grundplatte des Spannfutters 10 zu lagern (und nicht an der Montageplatte 13 der Werkzeughalterung 30). Gleichermaßen spielt es keine Rolle, ob die Zylinderstifte wie in Fig. 2 dargestellt relativ zur Grundplatte 15 des Spannfutters 10 unbeweglich sind und durch Löcher 33 in der Montageplatte 31 hindurchgeführt sind, oder ob die Zylinderstifte an der Montageplatte 31 fixiert (z.B. in diese eingeschraubt) sind und durch entsprechende Löcher in dem Spannfutter 10 hindurchgeführt sind. Die Stifte (11) sind auch nicht notwendigerweise eigenständige Teile und können theoretisch auch mit der Grundplatte 15 oder der Montageplatte 31 einstückig gefertigt sein (auch wenn das komplizierter zu fertigen wäre). In diesem Fall wären Grundplatte (oder Montageplatte) und Stifte ein integrales Bauteil. Die Stifte müssen auch nicht zylinderförmig sein. Es ist eine beliebige Form möglich, die in eine entsprechende Öffnung in dem gegenüber liegenden Teil eingreifen kann, um eine Bewegung in einer Ebene parallel zur Grundplatte zu blockieren und eine kleine Bewegung rechtwinklig dazu zuzulassen.

In einem weiteren Beispiel ist der Linearaktor 90 samt Schnellspannsystem und Werkzeugmaschine nicht an einem Manipulator (Industrieroboter) befestigt, sondern an einer unbeweglichen (ortsfeste) Basis. In diesem Fall wird von dem Roboter das Werkstück gehalten und so positioniert, dass die Werkzeugmaschine das vom Roboter gehaltene Werkstück berührt und bearbeiten kann. Der Roboter arbeitet positionsgeregelt und bewegt das Werkstück während des Bearbeitungsprozesses entlang einer vorgegebenen Trajektorie, während der an einer festen Basis montierte Linearaktor 90 die Kraftregelung durchführt und die Werkzeugmaschine gegen das vom Roboter gehaltene Werkstück drückt. Beispiele derartige Systeme - jedoch ohne Schnellspannsystem - sind in der Publikation US 2018/0126512 A1 beschrieben.

## Patentansprüche

1. Ein Schnellspannsystem, das folgendes umfasst:
ein Spannfutter (10) mit einer Grundplatte (15), welche dazu ausgebildet ist, an einem mittels eines Manipulators (80, 90) oder eines Linearaktors (90) kraftgeregelt positionierbaren Flansch (86, 91) montiert zu werden,
eine Werkzeughalterung (30) die zur Montage an einer Werkzeugmaschine ausgebildet ist, wobei die Werkzeughalterung eine Montageplatte (31) aufweist, die in verriegeltem Zustand an der Grundplatte (15) anliegt;
zwei oder mehr Stifte (11), die dazu ausgebildet sind, in montiertem Zustand die Montageplatte (31) an der Grundplatte (15) auszurichten und eine Bewegung der Montageplatte (31) relativ zu der Grundplatte (15) in einer Ebene parallel zur Grundplatte (15) zu verhindern;
mindestens ein elastisches Element (20), das eine Scheibe aus elastischem Material umfasst, die zwischen der Grundplatte (15) und Montageplatte (31) angeordnet ist; und
ein Spannverschluss (13, 32), der dazu ausgebildet ist, die Werkzeughalterung (30) an der Grundplatte (15) des Spannfutters (10) zu verriegeln, wobei im verriegelten Zustand das elastische Element (20) deformiert ist und eine Vorspannkraft zwischen der Grundplatte (15) und der Montageplatte (31) bewirkt.

2. Das Schnellspannsystem gemäß Anspruch 1,
wobei der Spannverschluss mehrere Spannbügel (13) und den Spannbügeln (13) zugeordnete Haken (32) umfasst.

3. Das Schnellspannsystem gemäß Anspruch 2,
wobei die Haken (32) an der Werkzeughalterung (30) montiert sind und die Spannbügel mit der Grundplatte (15) schwenkbar gelagert sind, oder
wobei die Haken (32) an der Grundplatte (15) montiert sind und die Spannbügel an der Werkzeughalterung (30) schwenkbar gelagert sind.

4. Das Schnellspannsystem gemäß einem der Ansprüche 1 bis 3,
wobei die Stifte (11) in montierten Zustand zur korrespondierende Löcher in der Montageplatte (31) verlaufen, und/oder
wobei die Stifte (11) in montierten Zustand zur korrespondierende Löcher in der Grundplatte (32) verlaufen.

5. Das Schnellspannsystem gemäß einem der Ansprüche 1 bis 4,
wobei die Stifte (11) an dem Flansch (86, 91) montiert sind und durch korrespondierende Löcher (12, 33) der Grundplatte (15) und der Montageplatte (31) verlaufen.

6. Das Schnellspannsystem gemäß einem der Ansprüche 1 bis 5,
wobei der Spannverschluss (13, 32) eine Totpunktverriegelung umfasst.

7. Eine Vorrichtung zum robotergestützten Bearbeiten einer Oberfläche eines Werkstücks, die folgendes aufweist:
ein Schnellspansystem gemäß einem der Ansprüche 1 bis 6, wobei der kraftgeregelt positionierbare Flansch ein erster Flansch des Linearaktors (90) ist,
ein Manipulator (80), wobei ein zweiter Flansch des Linearaktors (90) mit einem Endeffektorflansch (86) des Manipulator (80) gekoppelt ist,
wobei der Manipulator (80) dazu ausgebildet ist, den Linearaktor (90) samt der über das Schnellspannsystem an den Linearaktor (90) gekoppelten Werkzeugmaschine (50) positionsgeregelt relativ zu dem Werkstück (60) zu positionieren und der Linearaktor (90) dazu ausgebildet ist, eine Kraft zwischen Werkzeugmaschine (50) und dem Werkstück (60) einzustellen.

8. Eine Vorrichtung zum robotergestützten Bearbeiten einer Oberfläche eines Werkstücks, die folgendes aufweist:
ein Schnellspansystem gemäß einem der Ansprüche 1 bis 6, wobei der kraftgeregelt positionierbare Flansch ein erster Flansch des Linearaktors (90) ist,
eine ortsfeste Basis, an der ein zweiter Flansch des Linearaktors montiert ist;
ein Manipulator (80), der dazu ausgebildet ist, das Werkstück zu halten und positionsgeregelt relativ zu einer über das Schnellspannsystem mit dem Linearaktor gekoppelten Werkzeugmaschine (50) zu positionieren,
wobei der Linearaktor (90) dazu ausgebildet ist, eine Kraft zwischen Werkzeugmaschine und dem Werkstück einzustellen.

## Claims

1. A rapid clamping system, comprising:
a chuck (10) with a base plate (15) configured to be assembled with a flange (86, 91) which is positionable in a force-controlled manner by means of a manipulator (80, 90) or a linear actuator (90),
a tool holder (30) configured to be assembled with a machine tool, wherein the tool holder has an assembly plate (31) which rests against the base plate (15) in a locked state;
two or more pins (11) configured to align the assembly plate (31) with the base plate (15) in an assembled state and to prevent a movement of the assembly plate (31) relative to the base plate (15) in a plane parallel to the base plate (15);
at least one elastic member (20), comprising a disc made of elastic material interposed between the base plate (15) and the assembly plate (31); and
a clamping lock (13, 32) configured to lock the tool holder (30) to the base plate (15) of the chuck (10), wherein the elastic member (20) is deformed in the locked state and causes a biasing force between the base plate (15) and the assembly plate (31).

2. The rapid clamping system according to claim 1,
wherein the clamping lock comprises a plurality of clamps (13) and hooks (32) associated with the clamps (13).

3. The rapid clamping system according to claim 2,
wherein the hooks (32) are assembled with the tool holder (30) and the clamps are mounted pivotably with the base plate (15), or
wherein the hooks (32) are assembled with the base plate (15) and the clamps are pivotably mounted on the tool holder (30).

4. The rapid clamping system according to any one of claims 1 to 3,
wherein the pins (11) extend to corresponding holes in the assembly plate (31) in the assembled state, and/or
wherein the pins (11) extend to corresponding holes in the base plate (32) in the assembled state.

5. The rapid clamping system according to any one of claims 1 to 4,
wherein the pins (11) are assembled with the flange (86, 91) and extend through corresponding holes (12, 33) of the base plate (15) and the assembly plate (31).

6. The rapid clamping system according to any one of claims 1 to 5,
wherein the clamping lock (13, 32) comprises a dead center lock.

7. A device for robotic machining of a surface of a workpiece, having:
a rapid clamping system according to any one of claims 1 to 6, wherein the flange positionable in a force-controlled manner is a first flange of the linear actuator (90),
a manipulator (80), wherein a second flange of the linear actuator (90) is coupled to an end effector flange (86) of the manipulator (80),
wherein the manipulator (80) is configured to position the linear actuator (90) together with the machine tool (50) coupled to the linear actuator (90) via the rapid clamping system in a position-controlled manner relative to the workpiece (60), and the linear actuator (90) is configured to adjust a force between the machine tool (50) and the workpiece (60).

8. A device for robotic machining of a surface of a workpiece, having:
a rapid clamping system according to any one of claims 1 to 6,
wherein the flange positionable in a force-controlled manner is a first flange of the linear actuator (90),
a stationary base which a second flange of the linear actuator is assembled with;
a manipulator (80) configured to hold the workpiece and to position it in a position-controlled manner relative to a machine tool (50) coupled to the linear actuator via the rapid clamping system,
wherein the linear actuator (90) is configured to adjust a force between the machine tool and the workpiece.

## Revendications

1. Système de serrage rapide, qui comprend ce qui suit :
un mandrin de serrage (10) avec une plaque de base (15) qui est conçue pour être montée sur une bride (86, 91) qui peut être positionnée de manière commandée en force au moyen d'un manipulateur (80, 90) ou d'un actionneur linéaire (90),
un porte-outil (30) qui est conçu pour être monté sur une machine-outil, dans lequel le porte-outil a une plaque de montage (31) qui repose contre la plaque de base (15) à l'état verrouillé ;
deux ou plusieurs broches (11) qui sont conçues pour aligner la plaque de montage (31) sur la plaque de base (15) à l'état monté et pour empêcher un mouvement de la plaque de montage (31) par rapport à la plaque de base (15) dans un plan parallèle à la plaque de base (15) ;
au moins un élément élastique (20) comprenant un disque de matériau élastique interposé entre la plaque de base (15) et la plaque de montage (31) ; et
un verrou de serrage (13, 32)qui est conçu pour verrouiller le porte-outil (30) sur la plaque de base (15) du mandrin de serrage (10), dans lequel l'élément élastique (20) est déformé à l'état verrouillé et provoque une force de précontrainte entre la plaque de base (15) et la plaque de montage (31).

2. Système de serrage rapide selon la revendication 1,
dans lequel le verrou de serrage comprend une pluralité d'étriers de serrage (13) et des crochets (32) associés aux crochets de serrage (13).

3. Système de serrage rapide selon la revendication 2,
dans lequel les crochets (32) sont montés sur le porte-outil (30) et les étriers de serrage sont montés pivotants avec la plaque de base (15), ou
dans lequel les crochets (32) sont montés sur la plaque de base (15) et les étriers de serrage sont montés pivotants avec le porte-outil (30).

4. Système de serrage rapide selon l'une des revendications 1 à 3,
dans lequel les broches (11) s'étendent à l'état monté vers les trous correspondants dans la plaque de montage (31), et/ou
dans lequel les broches (11) s'étendent à l'état monté vers des trous correspondants dans la plaque de base (32).

5. Système de serrage rapide selon l'une des revendications 1 à 4,
dans lequel les broches (11) sont montées sur la bride (86, 91) et s'étendent à travers les trous correspondants (12, 33) de la plaque de base (15) et de la plaque de montage (31).

6. Système de serrage rapide selon l'une des revendications 1 à 5,
dans lequel le verrou de serrage (13, 32) comprend un verrou de point mort.

7. Dispositif pour le traitement robotisé d'une surface d'une pièce à usiner, comprenant ce qui suit :
un système de serrage rapide selon l'une des revendications 1 à 6, dans lequel la bride positionnée de manière commandée en force est une première bride de l'actionneur linéaire (90),
un manipulateur (80), dans lequel une seconde bride de l'actionneur linéaire (90) est couplée à une bride effectrice d'extrémité (86) du manipulateur (80),
dans lequel le manipulateur (80) est conçu pour positionner l'actionneur linéaire (90) y compris le porte-outil (50) couplée à l'actionneur linéaire (90) via le système de serrage rapide de manière réglée en position par rapport à la pièce à usiner (60), et l'actionneur linéaire (90) est conçu pour établir une force entre le porte-outil (50) et la pièce à usiner (60).

8. Dispositif pour le traitement robotisé d'une surface d'une pièce à usiner, comprenant ce qui suit :
un système de serrage rapide selon l'une des revendications 1 à 6, dans lequel la bride positionnée de manière commandée en force est une première bride de l'actionneur linéaire (90),
une base fixe sur laquelle est montée une seconde bride de l'actionneur linéaire ;
un manipulateur (80), qui est conçu pour maintenir la pièce à usiner et pour la positionner de manière réglée en position par rapport à un porte-outil (50) couplée à l'actionneur linéaire via le système de serrage rapide,
dans lequel l'actionneur linéaire (90) est conçu pour établir une force entre le porte-outil et la pièce à usiner.
